# EUROPÄISCHE PATENTSCHRIFT

(11) **EP 0 433 528 B1**
(45) Veröffentlichungstag und Bekanntmachung des Hinweises auf die Patenterteilung: **15.03.1995**
(21) Anmeldenummer: 90100687.4
(22) Anmeldetag: 13.01.1990
(51) Int. Cl.: F23N 5/06, G05D 23/12

(54) **Regelvorrichtung mit zwei durchflussgesteuerten Ausgängen**
Control device with two flow controlled outlets
Dispositif de réglage avec deux sorties à courant commandé

(30) Priorität: 19.12.1989 DE 3941879
(43) Veröffentlichungstag der Anmeldung: 26.06.1991
(73) Patentinhaber: Paul Isphording Metallwerke GmbH. & Co. KG, D-57439 Attendorn (DE)
(72) Erfinder: Keine, Ulrich, D-5952 Attendorn 2 Repe (DE); Sömer, Heinz, D-5940 Lennestadt 11 (DE)
(74) Vertreter: COHAUSZ HASE DAWIDOWICZ & PARTNER

(56) Entgegenhaltungen:
- DE-A- 2 556 982
- NL-A- 6 613 224
- US-A- 2 807 423
- US-A- 3 146 945
- US-A- 3 288 366

## Beschreibung

Die Erfindung betrifft eine Steuervorrichtung zum Steuern der Gaszufuhr einer Gasbrennstelle mit zwei Kochfeldbereichen, die über zwei getrennte Gaseingänge von den jeweils zugeordneten beiden Gasausgängen der Steuervorrichtung gespeist werden, mit einem nach dem Gaseingang der Steuervorrichtung liegenden, den Durchfluß steuernden und von Hand betätigten ersten Ventil, dessen Ventilstellglied durch eine thermoelektrische Zündsicherung nur öffnet, wenn eine Flamme an der Gasbrennstelle vorhanden ist, mit einem die Durchflußmenge regelnden zweiten Ventil, dessen Einstellung durch einen zweiten Thermofühler verändert wird, wobei die Durchflußmenge von Hand durch den Handgriff des ersten Ventils einstellbar ist. Eine solche Vorrichtung ist beispielsweise aus US-A- 2 807 423 bekannt.

Es sind verschiedene thermisch gesteuerte Regelvorrichtungen zum Steuern der Gaszufuhr bekannt. Bei allen diesen thermisch gesteuerten Regelvorrichtungen ist es nicht möglich, die Durchflußmenge von zwei unabhängig voneinander getrennt vorgesehenen Gasabgängen gleichzeitig zusammen über ein Ventilstellglied mit einer einzigen Steuervorrichtung zu bestimmen, wobei gleichzeitg durch Zwischenstellungen des Stellgliedes variable Durchflußmengen möglich sind, da bei bekannten Regelvorrichtungen immer nur die Durchflußmenge eines Gasabgangs über ein Ventilstellglied der Steuervorrichtung gesteuert wird.

Es sind auch thermisch gesteuerte Regelvorrichtungen mit zwei unabhängig voneinander getrennten Gasabgängen bekannt, wobei die Durchflußmenge für den zweiten Gasabgang jedoch nur durch vollständige Freigabe der Absperrvorrichtung erfolgt.

Aufgabe der Erfindung ist es, eine thermisch gesteuerte Regelvorrichtung derart zu verbessern, daß mindestens zwei unabhängig voneinander getrennt vorgesehene Gasabgänge gleichzeitig zusammen über ein Ventilstellglied und eine einzige Steuervorrichtung durchflußmäßig gesteuert werden können, wobei gleichzeitig durch Zwischenstellungen des Stellgliedes variable Durchflußeinstellungen möglich sind.

Diese Aufgabe wird erfindungsgemäß dadurch gelöst, daß das Gas über eine einzige Leitung vom Gaseingang zum ersten Ventil und von dort zum zweiten Ventil strömt, daß hinter dem zweiten Ventil der Gasstrom zu den beiden Gasausgängen verzweigt und daß die hinter dem zweiten Ventil abgezweigte, zum zweiten Gasausgang führende Leitung über das Ventilstellglied des ersten Ventils geführt und von diesem mit einer zweiten Steuereinrichtung in der Durchflußmenge einstellbar ist.

Eine vorteilhafte Ausgestaltung der Erfindung ist im Unteranspruch aufgeführt.

Eine Ausführungsart der Erfindung wird in den schematisch dargestellten Zeichnungen gezeigt und im folgenden näher beschrieben. Es zeigen:

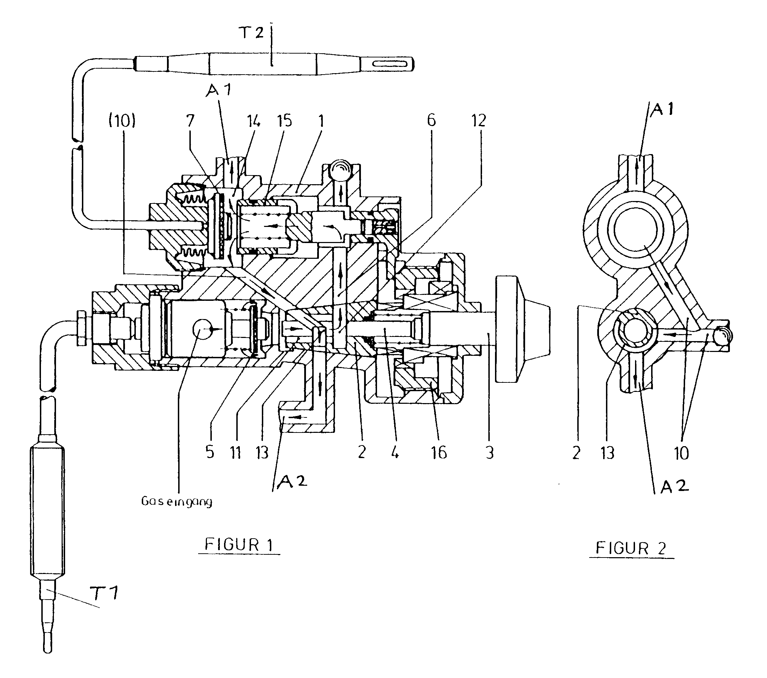

- Figur 1 + 2: einen Schnitte durch die erfindungsgemäße Vorrichtung mit dargestellter Steuervorrichtung und dem Stellglied;
- Figur 3: eine schematische Darstellung des Betätigungsablaufes der Regelvorrichtung;
- Figur 4: eine schematische Darstellung eines Kochfeldes mit zwei Kochfeldbereichen I und II.

Die thermisch gesteuerte Regelvorrichtung (erstes Ventil 2,5,11,12 zum Steuern der Gaszufuhr einer Gasverbrauchseinrichtung I,II, insbesondere eines Gasgerätes, weist zwei in der Regelvorrichtung hintereinander in der Leitung angeordneten Absperrorgane 2,5 auf, von denen eines 5 als thermogesteuerte Absperrvorrichtung die Gaszufuhr nur absperrt oder vollständig freigibt und das andere als Steuervorrichtung durch Zwischenstellungen des Stellgliedes 2 die Durchflußmenge zweier getrennt voneinander vorgesehenen Gasabgänge A1,A2 bestimmt. Die Ventilstellglieder 2,5 beider Absperrorgane werden durch eine gemeinsame Stellspindel 3 betätigt. Das Ventilstellglied 5 der Absperrvorrichtung liegt koaxial zur Spindelachse 3 und das Ventilstellglied 2 der Steuervorrichtung außerhalb der Spindelachse.

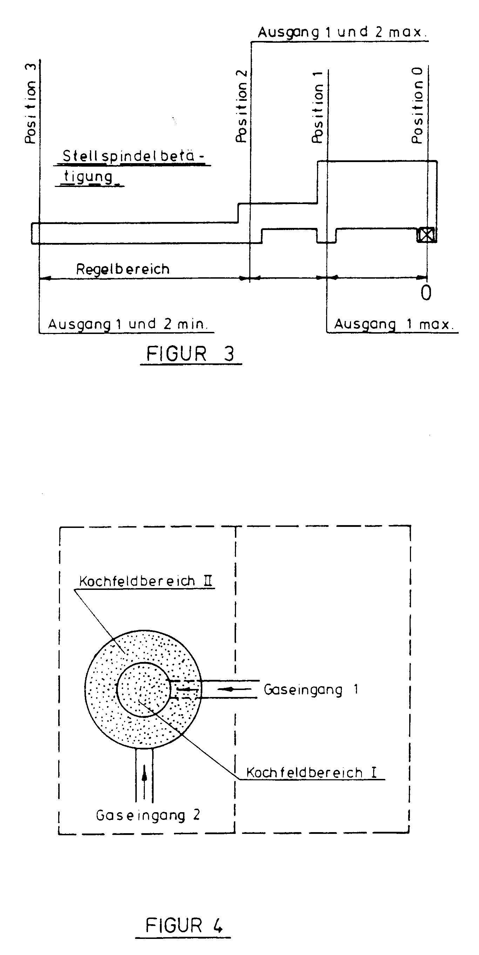

Durch Betätigung des im Gehäuse 1 gelagerten Stellgliedes 2 über eine Stellspindel 3 auf die in Figur 3 dargestellte Pos. 1 entgegen dem Uhrzeigersinn und gleichzeitiges Eindrücken eines im Stellglied 2 geführten Stößels 4 wird das Ventilstellglied 5 der thermoelektrischen Zündsicherung T1 geöffnet und erlaubt so einen Gasstrom über eine achsial angeordnete Bohrung 11 im Stellglied 2, weiter über eine am äußersten Kegelmantel des Stellgliedes 2 angeordnete erste radial verlaufende Nut 12, die mit der achsial angeordneten Bohrung 11 des Stellgliedes 2 in Verbindung steht, weiter über eine erste im Gehäuse 1 vorhandene Versorgungsbohrung 6 zum geöffneten Ventilstellglied 7 der Steuervorrichtung T2 und weiter zum Ausgang A1, der am Gehäuse 1 angeordnet ist, und kann so zu einem in Figur 4 dargestellten Gaseingang 1 des Kochfeldbereiches I gelangen. Die durch das geöffnete Ventilstellglied 7 der Steuervorrichtung T2 in die Verteilerkammer 14 einströmende Gasmenge wird zunächst über eine zweite im Gehäuse 1 angeordnete Versorgungsbohrung 10 bis zur Absperrung des Stellgliedes 2 zurückgeführt.
Bei einer weiteren Drehung des Stellgliedes 2 übr eine Stellspindel 3 auf die in Figur 3 dargestellte Pos. 2 entgegen dem Uhrzeigersinn wird die durch die Versorgungsbohrung 10 ankommende Gasmenge durch eine am äußeren Kegelmantel des Stellgliedes 2 radial angeordnete zweite Nut 13 zum Ausgang A2 des Gehäuses 1 weitergeleitet und kann so zu dem in Figur 4 dargestellten Gaseingang 2 des Kochfeldbereiches II gelangen.

Die Gasmenge, die nun durch die Ausgänge A1 und A2 des Gehäuses 1 zu den Kochfeldbereichen I und II gelangt, wird durch das Ventilstellglied 7 der Thermofühler-Steuervorrichtung T2 so geregelt, daß an den Kochfeldern I und II der Figur 4 immer eine geregelte Gasmenge austritt und somit eine gewünschte Temperatur beim Kochen erzielt werden kann.

Bei einer weiteren Drehung des Stellgliedes 2 über die Stellspindel 3 zwischen Pos. 2 und Pos. 3 wird die Gasmenge der Ausgänge A1 und A2 durch das Ventilstellglied 7 der Steuervorrichtung T 2 und durch eine achsiale Hubbewegung der Regelbuchse 15, die über ein Schraubengetriebe 16 von der Stellspindel 3 gesteuert wird, so geregelt, daß verschiedene gewünschte Temperaturen an den beiden Kochfeldern I und II möglich sind, wobei in Pos. 2 eine Maximum- und in Pos. 3 eine Minimum-Temperatur erreicht wird.

Somit erfolgt durch Betätigen des Stellgliedes 2 über die Stellspindel 3 ein Durchfluß zum Ventilstellglied 7 der Steuervorrichtung T2, wobei die durch das Ventilstellglied 7 der Steuervorrichtung T2 geregelte Durchflußmenge in einer Verteilerkammer 14 innerhalb des Gehäuses mündet, von wo aus jeweils eine Versorgungsbohrung den Austritt der geregelten Durchflußmenge zum ersten und zum zweiten Gasabgang A1 zuläßt. Während die geregelte Durchflußmenge des ersten Gasabgangs A1 direkt zum Brenner führt, wird die geregelte Durchflußmenge für den zweiten Gasabgang A2 durch eine vorgesehene Gehäuse-Versorgungsbohrung 10 zum Stellglied 2 zurückgeführt und kann nur in einer vorgesehenen Schaltstellung des Stellgliedes 2 zum zweiten Gasabgang A2 fließen.

## Patentansprüche

1. Steuervorrichtung zum Steuern der Gaszufuhr einer Gasbrennstelle mit zwei Kochfeldbereichen (I, II), die über zwei getrennte Gaseingänge von den jeweils zugeordneten beiden Gasausgängen (A1, A2) der Steuervorrichtung gespeist werden, mit einem nach dem Gaseingang der Steuervorrichtung liegenden, den Durchfluß steuernden und von Hand betätigten ersten Ventil (2, 5, 11, 12), dessen Ventilstellglied (2) durch eine thermoelektrische Zündsicherung (T1) nur öffnet, wenn eine Flamme an der Gasbrennstelle vorhanden ist, mit einem die Durchflußmenge regelnden zweiten Ventil (7, 14, 15), dessen Einstellung durch einen zweiten Thermofühler (T2) verändert wird, wobei die Durchflußmenge von Hand durch den Handgriff (3) des ersten Ventils (2, 5, 11, 12) einstellbar ist, **dadurch gekennzeichnet,** daß das Gas über eine einzige Leitung (6) vom Gaseingang zum ersten Ventil (2, 5, 11, 12) und von dort zum zweiten Ventil (7, 14, 15) strömt, daß hinter dem zweiten Ventil der Gasstrom zu den beiden Gasausgängen (A1, A2) verzweigt und daß die hinter dem zweiten Ventil (7, 14, 15) abgezweigte, zum zweiten Gasausgang (A2) führende Leitung (10) über das Ventilstellglied (2) des ersten Ventils geführt und von diesem mit einer zweiten Steuereinrichtung (13) in der Durchflußmenge einstellbar ist.

2. Steuervorrichtung nach Anspruch 1, **dadurch gekennzeichnet**, daß zur Regelung der Gasgesamtzufuhr das Ventilstellglied (2) des ersten Ventils eine axiale Bohrung (11) und eine damit verbundene äußere Nut (12) und zur Regelung der zum zweiten Gasabgang führenden Leitung (10) eine partielle Umfangsnut (13) aufweist.

## Claims

1. A control device for controlling the gas supply of a gas burner having two cooking area zones (I, II) each supplied via two separate gas inlets from the two associated gas outlets (A1, A2) of the control device, having: a first valve (2, 5, 11, 12) which is disposed downstream of the gas inlet of the control device and which controls the flow and is manually actuated and whose valve adjusting member (2) opens via a thermoelectric safety pilot (T1) only when a flame is present at the gas burner; and a second valve (7, 14, 15) which controls the flow rate and whose adjustment is changed by a second thermosensor (T2), the flow rate being manually adjustable via the handle (3) of the first valve (2, 5, 11, 12), characterized in that the gas flows via a single line (6) from the gas inlet to the first valve (2, 5, 11, 12) and from there to the second valve (7, 14, 15); downstream of the second valve the gas flow to the two gas outlets (A1, A2) branches, and the line (10) branched-off downstream of the second valve (7, 14, 15) and leading to the second gas outlet (A2) extends via the valve adjusting member (2) of the first valve and is adjustable thereby as regards flow rate via a second control device (13).

2. A control device according to claim 1, characterized in that the valve adjusting member (2) of the first valve has an axial bore (11) and an outer groove connected thereto (12) to control the total gas supply, and is formed with a partial peripheral groove (13) to control the line (10) leading to the second gas outlet.

## Revendications

1. Dispositif de commande pour la commande de l'alimentation en gaz d'un emplacement de combustion de gaz avec deux zones de champ de cuisson (I, II) qui sont alimentées, par l'intermédiaire de deux entrées de gaz séparées, par les deux sorties de gaz (A1, A2) respectivement adjointes du dispositif de commande, avec une première vanne (2, 5, 11, 12) se trouvant après l'entrée de gaz du dispositif de commande, commandant la circulation et commandée à la main, dont l'organe de réglage de vanne (2) n'ouvre, au moyen d'une sécurité d'allumage thermoélectrique (T1), que quand une flamme existe à l'emplacement de combustion de gaz, avec une seconde vanne (7, 14, 15) régulant le débit de passage, dont le réglage est modifié par un second capteur thermique (T2), le délit de passage pouvant être réglé à la main au moyen de la poignée (3) de la première vanne (2, 5, 11, 12),
caractérisé en ce que le gaz s'écoule, par une conduite (6) unique, de l'entrée de gaz à la première vanne (2, 5, 11, 12) et de là à la seconde vanne (7, 14, 15), que, après la seconde vanne, le flux de gaz se ramifie vers les deux sorties de gaz (A1, A2) et que la conduite (10) divergeant après la seconde vanne (7, 14, 15), conduisant à la seconde sortie de gaz (A2) est guidée sur l'organe de réglage de vanne (2) de la première vanne et peut être réglée en débit de passage par celle-ci au moyen d'un second dispositif de commande (13).

2. Dispositif de commande selon la revendication 1, caractérisé en ce que, pour la régulation de l'amenée totale de gaz, l'organe de réglage de vanne (2) de la première vanne présente un alésage axial (11) et une rainure extérieure (12) qui lui est reliée et pour la régulation de la conduite (10) conduisant à la seconde sortie de gaz, une rainure périphérique partielle (13).
